# EUROPÄISCHE PATENTSCHRIFT

(11) **EP 1 380 151 B1**
(45) Veröffentlichungstag und Bekanntmachung des Hinweises auf die Patenterteilung: **28.12.2005**
(21) Anmeldenummer: 02729865.2
(22) Anmeldetag: 09.04.2002
(51) Int. Cl.: H04M 1/00

(54) **VERFAHREN ZUM STEUERN VON MASCHINEN ODER GERÄTEN AN FESTNETZANSCHLÜSSEN ÜBER MINDESTENS EIN TELEKOMMUNIKATIONSNETZ**
METHOD FOR CONTROLLING MACHINES OR DEVICES ON FIXED LINE CONNECTIONS BY MEANS OF AT LEAST ONE TELECOMMUNICATION NETWORK
PROCEDE DE COMMANDE DE MACHINES OU APPAREILS RACCORDES AU RESEAU TELEPHONIQUE FIXE PAR AU MOINS UN RESEAU DE TELECOMMUNICATION

(30) Priorität: 09.04.2001 DE 10117655
(43) Veröffentlichungstag der Anmeldung: 14.01.2004
(73) Patentinhaber: T-Mobile Deutschland GmbH, 53227 Bonn (DE)
(72) Erfinder: SALEM, Tarek, 53227 Bonn (DE)
(74) Vertreter: Riebling, Peter
(86) Internationale Anmeldenummer: PCT/DE2002/001303
(87) Internationale Veröffentlichungsnummer: WO 2002/082780

(56) Entgegenhaltungen:
- WO-A-00/56016
- WO-A-99/49680

## Beschreibung

Die Erfindung betrifft ein Verfahren zum Steuern von Maschinen oder Geräten an Festnetzanschlüssen über mindestens ein Telekommunikationsnetz nach dem Oberbegriff der unabhängigen Patentansprüche.

Es ist allgemein bekannt, elektrische Geräte, z.B. einen Anrufbeantworter, aus der Ferne über ein Telekommunikationsnetz zu steuern. Auf dem Anrufbeantworter gespeicherte Nachrichten können über ein beliebiges Telefon abgefragt werden, indem man den entsprechenden Anschluss anwählt und die Abfrage des Anrufbeantworters durch Eingabe einer Geheimzahl (PIN) freischaltet.
Diese Art der Steuerung ist ziemlich unkomfortabel und erlaubt keine Übermittlung von längeren oder komplexen Steuerbefehlssequenzen, um Maschinen oder beliebige andere Geräte steuern zu können.

Es ist außerdem bekannt, dass elektrische Geräte über Kurznachrichten (SMS) aus Mobilfunknetzen ferngesteuert werden können. Dies macht die Steuerung zwar komfortabler, setzt aber das Vorhandensein eines Mobilfunkanschlusses zum Empfang der SMS voraus.

WO 99/49680 veröffentlicht die Verwendung von Kurznachrichten zum Steuern von Geräten über ein Telekommunikationsnetz, wobei die Kurznachrichten seitens eines Senders mit Steuerbefehlen versehen, seitens eines verbundenen Empfängers ausgewertet und in Form von Steuersignalen an die Maschinen oder Geräte weitergeleitet werden.

WO 00/56016 beschreibt die Anbindung eines Mobilfunkgerätes an einer Basisstation über ein Festnetz. Das Dokument berücksichtigt auch die Übertragung der Information mittels Kurznachrichten.

Es ist Aufgabe der Erfindung, ein Verfahren und eine Vorrichtung vorzuschlagen, welche ein einfaches und sicheres Steuern von Maschinen und Geräten an Festnetzanschlüssen über mindestens ein Telekommunikationsnetz ermöglichen.

Diese Aufgabe wird durch die in den unabhängigen Patentansprüchen angegebenen Merkmale gelöst.

Erfindungsgemäß ist vorgesehen, Kurznachrichten (SMS: Short Messages) zur Steuerung von Maschinen und Gerätschaften zu verwenden. Hierzu werden die SMS vom Sender mit speziellen Steuercodes versehen. Der Empfänger wertet die in der SMS beinhalteten Steuercodes aus und führt die entsprechenden Befehle aus.
Das Senden und Empfangen von Kurznachrichten in digitalen Mobilfunknetzen ist bereits seit einigen Jahren Stand der Technik. Kurznachrichten werden bevorzugt zur Kommunikation zwischen Personen und zum Abruf von Nachrichten und anderen Informationen verwendet und erfreuen sich zunehmender Beliebtheit. Die Erfindung weitet den Einsatz von SMS auf die Steuerung von Maschinen und Geräten über Festnetzanschlüsse aus.

Die Vorteile der Erfindung gegenüber dem Stand der Technik liegen darin, dass die Steuerung von Maschinen per SMS relativ komplexe Befehlssequenzen zulässt, wobei die SMS nicht nur zwischen Mobilfunkendgeräten sondern auch zwischen Mobilfunkendgeräten und/oder Festnetzanschlüssen ausgetauscht werden können. Hierdurch erschließen sich eine Vielzahl neuer Anwendungen, nicht nur im industriellen Bereich, sondern insbesondere auch im privaten Bereich (Domotik).

Vorteilhafte Ausgestaltungen und Weiterbildungen der Erfindung sind in den abhängigen Patentansprüchen angegeben.

Gemäß der Erfindung werden die Kurznachrichten seitens des Senders mit Steuerbefehlen versehen, die seitens des Empfängers ausgewertet und in Form von Steuersignalen an die Maschinen oder Geräte weitergeleitet werden. Voraussetzung für die Steuerung von Maschinen nach geschildertem Verfahren ist allerdings die Verfügbarkeit von SMS-fähigen Mobilfunk- bzw. Festnetzanschlüssen sowohl auf Sender- als auch auf Empfängerseite. Als Festnetzanschluss kommt sowohl ein analoger als auch ein digitaler Festnetzanschluss in Betracht. die Steuerbefehle enthatten eine Identifikationsnummer der zu steuernden Maschine oder des Gerätes, über welche diese einzeln angesprochen werden können.

Die Kurznachrichten selbst sind als Steuerbefehle enthaltende Kurznachrichten gekennzeichnet, wobei die Steuerbefehle von der jeweiligen Gegenstelle anhand der Adresse des Senders und/oder der Adresse des Empfängers authentifiziert werden.

Wie bereits erwähnt können die Kurznachrichten über ein Mobilfunknetz und/oder ein öffentliches Festnetz übertragen werden, wobei als Schnittstelle zwischen Mobilfunknetz und Festnetz vorteilhaft ein SMS-Gateway eingesetzt wird, welches die SMS Informationen in das jeweils benötigte Format konvertiert.

An das Telekommunikationsendgerät des Empfängers ist ein Steuermodul angebunden oder in diesem implementiert, welches eingehende Kurznachrichten empfängt und deren Inhalt auf Steuerbefehle auswertet, die an die zu steuernde Maschine oder Gerät weitergegeben werden.
Das Steuermodul kann drahtlos oder drahtgebunden mit der zu steuernden Maschine oder dem Gerät verbunden sein.

Als Rückmeldung über einen ausgeführten Befehl kann vom Steuermodul eine Quittierung über die empfangenen und/oder ausgeführten Steuerbefehle an den Sender übermittelt werden. Die Quittierung wird vorzugsweise als Kurznachricht versandt. Die Quittierung kann positiv oder negativ sein und bei Erhalt bzw. Ausführung des Befehls erfolgen.

Die Steuerbefehle werden beim Sender bzw. beim Endgerät des Senders vorzugsweise über ein spezielles Menü oder eine spezielle Eingabeaufforderung eingegeben. Dies beschleunigt und erleichtert die Eingabe der Steuerbefehle.

Die Vorrichtung zur Durchführung des Verfahrens umfasst einen zum Senden von Kurznachrichten (SMS) eingerichteten Sender und einen zum Empfang von Kurznachrichten eingerichteten Empfänger, wobei zwischen dem Sender und dem Empfänger Kurznachrichten ausgetauscht werden, die empfängerseitig zur Steuerung der Maschinen oder Geräte verwendet werden.

Hierbei sind sowohl der Sender als auch der Empfänger als ein zum Senden bzw. Empfangen von Kurznachrichten eingerichtetes Telekommunikationsendgerät ausgebildet.
Die Telekommunikationsendgeräte können Mobilfunkendgeräte oder analoge oder digitale Endgeräte für den Festnetzanschluss sein.

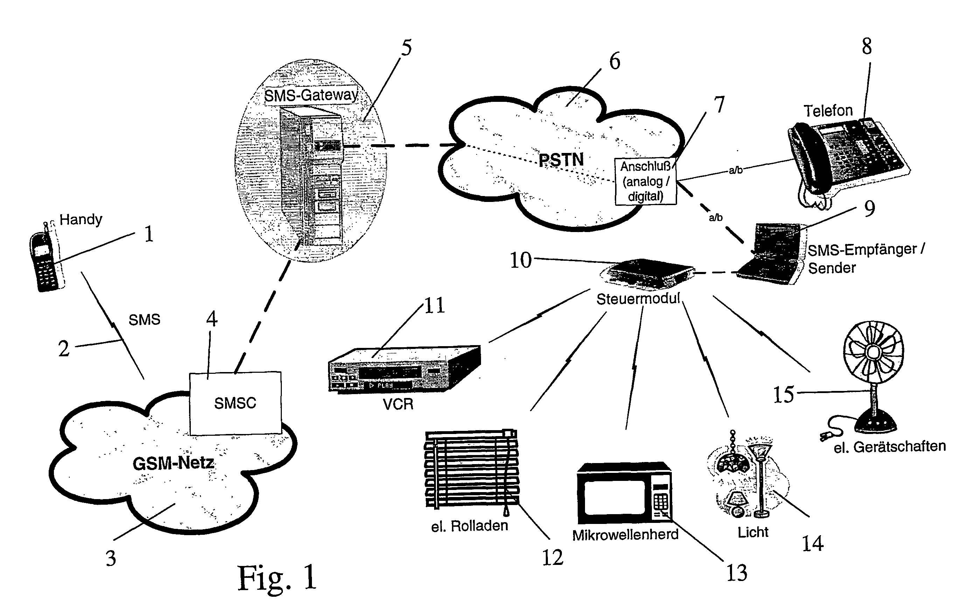

Die Erfindung wird nachfolgend anhand der beiliegenden Zeichnungsfigur näher beschrieben. Dabei gehen aus der Zeichnung und ihrer Beschreibung weitere Merkmale und Vorteile der Erfindung hervor.

Die einzige Zeichnung zeigt allgemein zwei Telekommunikationsnetze, ein Mobilfunknetz 3, z.B. ein GSM-Mobilfunknetz, und ein öffentliches Festnetz 6 (PSTN), die über entsprechende Netzübergänge miteinander verbunden sind. Das öffentliche Festnetz 6 besitzt in bekannter Weise eine Vielzahl von Teilnehmeranschlüssen, im dargestellten Beispiel den Teilnehmeranschluss 7, an welchem analoge oder digitale Endgeräte 8, 9, wie z.B. ein Telefon, angeschlossen sind. Über den dargestellten Kommunikationspfad können die Endgeräte 8, 9 z.B. mit einem mobilen Endgerät 1 des Mobilfunknetzes kommunizieren.

Zwischen dem Mobilfunknetz 3 und dem Festnetz 6 ist ein SMS-Gateway 5 angeordnet, welches eine Übertragung von SMS Kurznachrichten vom Mobilfunknetz 3 zum Festnetz und umgekehrt erlaubt. Eine vom Mobilfunkendgerät 1 abgesetzte Kurznachricht 2 gelangt zunächst zur Kurznachrichtenzentrale 4 des Mobilfunknetzes 3. Hauptaufgabe des SMS-Gateway 5 ist die Konvertierung des von einer Kurznachrichtenzentrale 4 (SMSC: Short Message Service Center) empfangenen SMS Inhalts in ein für eine Übertragung bis an ein Endgerät 8, 9 geeignetes Format. Das SMS-Gateway 5 ist auf einer Seite an die Kurznachrichtenzentrale 4 des Mobilfunknetzes 3 angebunden. Auf der anderen Seite ist eine Anbindung an das öffentliche Telekommunikationsnetz 6 mit Teilnehmeranschlüssen 7 realisiert.

Seitens des Teilnehmeranschlusses 7 wird zum Senden und Empfangen von SMS ein geeignetes Endgerät 8, 9 oder ein entsprechendes Zusatzmodul benötigt, welches die übertragenen SMS Informationen für den Empfänger "leserlich" macht. Das Zusatzmodul kann entweder als eigenständiges Endgerät oder als Teil eines bestehenden Endgeräts, z.B. Telefon, Fax oder PC oder als Vorschaltgerät für ein herkömmliches Endgerät implementiert sein.

Zur erfindungsgemäßen Steuerung von Maschinen oder Geräten 11-15 mittels Kurnachrichten wird ein Steuermodul 10 verwendet, das die beim Endgerät 9 eingehenden Kurznachrichten mitliest und deren Inhalt auf Steuerbefehle auswertet, die an die zu steuernde Maschine oder das Gerät 11-15 weitergegeben werden. Das Steuermodul 10 ist vorzugsweise im SMS-Empfängerteil des Festnetzanschlusses implementiert. Aufgabe dieser Vorrichtung ist es, den Inhalt der empfangenen SMS auszuwerten und auf gültige Steuerbefehle zu durchsuchen.
Das Steuermodul 10 kommuniziert vorzugsweise drahtlos, z.B. über eine Infrarot- oder Funkschnittstelle, mit den zu steuernden Geräten 11-15. Es kann jedoch auch eine leitungsgebundene Übertragung der Signale zwischen Steuermodul 10 und den Geräten 11-15 vorgesehen sein.

Jede Kurznachricht enthält neben der eigentlichen Information unter anderem die Senderadresse, die Empfängeradresse und einen Indikator der angibt, um welche Art von Nachricht es sich handelt, z.B. Punkt-zu-Punkt SMS oder Broadcast SMS. Diese Indikator kann erfindungsgemäß zur Identifikation von Steuerbefehlen enthaltenden SMS verwendet werden. Es ist im Grunde unerheblich, ob die SMS mit den Steuerbefehlen als solche gekennzeichnet ist (z.B. durch besondere Header-Informationen), oder ob die Steuerbefehle durch ein besonderes Format erkennbar sind (Inband-Signalisierung).

Idealerweise wird zur bequemeren Handhabbarkeit der Steuerbefehle ein SMS-Template im Sender (Mobilfunkendgerät 1) vorgehalten. Am Beispiel eines Templates zur Programmierung eines Videorecorders soll dies verdeutlicht werden:
"VCR, Datum: ...., Kanal: .., Start: ....., Stop: .....".
"VCR, Datum: 02.03.01, Kanal: 11, Start: 19:00, Stop: 20:15".

Es ist auch eine Applikation nach dem SIM Application Toolkit (SAT) hierfür prinzipiell denkbar. Allerdings ist die Logistik für das Einbringen der Applikation auf die Karte für diesen Fall eher aufwendig und nur bedingt vorteilhaft.

Um Missbrauch zu unterbinden kann die Berechtigung zur Eingabe von Steuerbefehlen an die Identifikation des Absenders gebunden werden, z.B. anhand der Rufnummer der eingehenden SMS.

Die Übertragung einer Kurznachricht (SMS) an ein Endgerät geschieht wie folgt:
Vom Mobilfunkendgerät 1 wird eine Kurznachricht 2 (SMS) abgesetzt, die z.B. die oben angegebenen Steuerbefehle zur Steuerung eines Videorekorders 11 enthält. Die Kurznachricht wird über das Mobilfunknetz 3 an die Kurznachrichtenzentrale 4 (SMSC) weitergeleitet und von dort an das SMS-Gateway 5 übergeben. Das SMS-Gateway 5 stellt über das Festnetz 6 eine Verbindung zu der angegebenen Zieladresse (Rufnummer) des Endgerätes 9 des angesprochenen Empfängers her. Die SMS wird im SMS-Gateway derart konvertiert, daß eine Übertragung bis an das angerufene Endgerät 9 möglich ist. Die Kurznachricht wird im Endgerät 9 empfangen und vom Steuermodul 10 auf enthaltende Steuerbefehle untersucht. Im dargestellten Fall erkennt das Steuermodul, dass die Kurznachricht Steuerbefehle für den Videorekorder 11 enthält. Die Steuerbefehle werden entsprechend aufbereitet und an den Videorekorder 11 übertragen der dann entsprechend programmiert wird. Die Übertragung des Steuerbefehls kann drahtgebunden erfolgen. Idealerweise erfolgt die Weitergabe des Steuerbefehls jedoch per Funk. Besonders vorteilhaft kann hierfür z.B. die Bluetooth-Technologie eingesetzt werden.

Die Anwendungsbeispiele sind sehr vielfältig: von der Programmierung/Steuerung des Videorecorders 11 über die Regelung der Heizung bis, hin zum Ein-/ Ausschalten elektrischer Geräte 12-15 (Licht, Radio, Rollladen). All dies kann bequem und sicher von unterwegs per SMS geschehen. Bisher war eine komfortable Fernsteuerung von Geräten an Festnetzanschlüssen von Unterwegs nicht möglich.

Als Erweiterung der Erfindung ist die Möglichkeit zu sehen, auch das Senden der SMS von einem Festnetzanschluss aus zu erledigen. Voraussetzung hierfür ist die Verfügbarkeit eines SMS-sendefähigen Festnetzanschlusses.

### Bezugszeichenliste

- 1: Mobiltelefon
- 2: SMS-Nachricht
- 3: Mobilfunknetz
- 4: SMSC (Kurznachrichtenzentrale)
- 5: SMS-Gateway
- 6: PSTN (Öffentliches Festnetz)
- 7: Festnetzanschluss (analog/digital)
- 8: Endgerät (Telefon)
- 9: Endgerät (SMS-fähig)
- 10: Steuermodul
- 11: Videorekorder
- 12: Elektrischer Rollladen
- 13: Mikrowellenherd
- 14: Beleuchtung
- 15: Elektrisches Gerät

## Patentansprüche

1. Verfahren zum Steuern von Maschinen oder Geräten an Festnetzanschlüssen über mindestens ein Telekommunikationsnetz, bei dem zur Steuerung der Maschinen oder Geräte (11-15) SMS-Kurznachrichten verwendet werden, die mit Hilfe eines SMS-Gateway (5) zwischen mindestens einem Mobilfunknetz (3) und einem Festnetz (6) übertragen werden, wobei die SMS-Kurznachrichten seitens eines Senders (1) mit Steuerbefehlen versehen werden, die seitens eines mit dem Festnetz (6) verbundenen Empfängers (8, 9) ausgewertet und in Form von Steuersignalen an die Maschinen oder Geräte (11-15) weitergeleitet werden, **dadurch gekennzeichnet,**
**dass** an das Telekommunikationsendgerät (9) des Empfängers ein Steuermodul (10) angebunden oder in diesem implementiert ist, welches eingehende SMS-Kurznachrichten empfängt und deren Inhalt auf Steuerbefehle auswertet, die an die zu steuernde Maschine oder Gerät (11-15) weitergegeben werden, wobei die Steuerbefehle eine Identifikationsnummer der zu steuernden Maschine oder Gerätes (11-15) enthalten, wobei die SMS-Kurznachrichten (2) als Steuerbefehle enthaltende SMS-Kurznachrichten gekennzeichnet sind, und die Steuerbefehle anhand der Adresse des Senders (1) und/oder der Adresse des Empfängers (8, 9) von der jeweiligen Gegenstelle authentifiziert werden.

2. Verfahren nach Anspruch 1, **dadurch gekennzeichnet, dass** die SMS-Kurznachrichten mit Hilfe eines SMS-Gateways (5) zwischen mindestens einem Mobilfunknetz (3) und einem Festnetz (6) übertragen werden.

3. Verfahren nach einem oder mehreren der vorhergehenden Ansprüche, **dadurch gekennzeichnet, dass** das Steuermodul (10) drahtlos oder drahtgebunden mit der zu steuernden Maschine oder dem Gerät (11-15) kommuniziert.

4. Verfahren nach einem oder mehreren der vorhergehenden Ansprüche, **dadurch gekennzeichnet, dass** vom Steuermodul (10) eine Quittierung über die empfangenen und/oder ausgeführten Steuerbefehle an den Sender (1) übermittelt wird.

5. Verfahren nach einem oder mehreren der vorhergehenden Ansprüche, **dadurch gekennzeichnet, dass** die Steuerbefehle beim Sender (1) über ein spezielles Menü oder eine Eingabeaufforderung eingegeben werden können.

6. Vorrichtung zum Steuern von Maschinen und Geräten über mindestens ein Telekommunikationsnetz nach dem Verfahren gemäß den Ansprüchen 1 bis 5, welche umfasst:
einen zum Senden von SMS-Kurznachrichten eingerichteten Sender (1) und einen zum Empfang von SMS-Kurznachrichten eingerichteten Empfänger (8, 9), zwischen denen SMS-Kurznachrichten (2) ausgetauscht werden, die empfängerseitig zur Steuerung der Maschinen oder Geräte (11-15) verwendet werden, und ein mit dem empfängerseitigen Telekommunikationsendgerät (9) verbundenes Steuermodul (10), welches eingehende SMS-Kurznachrichten empfängt und deren Inhalt auf Steuerbefehle auswertet, die an die zu steuernde Maschine oder Gerät (11-15) weitergegeben werden, wobei sowohl der Sender (1) als auch der Empfänger (8, 9) als ein zum Senden bzw. Empfangen von SMS-Kurznachrichten eingerichtetes Telekommunikationsendgerät ausgebildet sind.

7. Vorrichtung nach Anspruch 6, **dadurch gekennzeichnet, dass** die Telekommunikationsendgeräte analoge oder digitale Endgeräte (8, 9) für den Festnetzanschluss sind.

8. Vorrichtung nach einem der Ansprüche 6 oder 7, **dadurch gekennzeichnet, dass** ein SMS-Gateway (5) zur Übertragung der SMS-Kurznachrichten zwischen mindestens einem Mobilfunknetz (3) und einem Festnetz (6) vorgesehen ist.

## Claims

1. Method for controlling machines or equipment at land-line connections via at least one telecommunications network, in which for control of the machines or equipment (11-15) there are used short messages (SMS) which are transmitted by means of an SMS gateway (5) between at least one mobile telephone network (3) and a land-line network (6), the SMS short messages being provided by a transmitter (1) with control commands which are evaluated by a receiver (8, 9) connected to the land-line network (6) and transmitted in the form of control signals to the machines or equipment (11-15), **characterised in that** connected to or implemented in the telecommunications terminal (9) of the receiver is a control module (10) which receives incoming SMS short messages and evaluates their contents for control commands which are transmitted to the machine or equipment (11-15) to be controlled, the control commands containing an identification number of the machine or equipment (11-15) to be controlled, the SMS short messages (2) being characterised as SMS short messages which contain control commands, and the control commands being authenticated by the respective remote terminal with the aid of the address of the transmitter (1) and/or the address of the receiver (8, 9).

2. Method according to claim 1, **characterised in that** the SMS short messages are transmitted by means of an SMS gateway (5) between at least one mobile telephone network (3) and a land-line network (6).

3. Method according to one or more of the preceding claims, **characterised in that** the control module (10) communicates wirelessly or through wires with the machine or equipment (11-15) to be controlled.

4. Method according to one or more of the preceding claims, **characterised in that** an acknowledgement of the control commands received and/or carried out is transmitted to the transmitter (1) by the control module (10).

5. Method according to one or more of the preceding claims, **characterised in that** the control commands can be entered at the transmitter (1) via a special menu or an entry request.

6. Device for controlling machines and equipment via at least one telecommunications network by the method according to claims 1 to 5, which includes:
a transmitter (1) set up to transmit SMS short messages and a receiver (8, 9) set up to receive SMS short messages, between which are exchanged SMS short messages (2) which are used on the receiver side to control the machines or equipment (11-15), and a control module (10) which is connected to the telecommunications terminal (9) on the receiver side and which receives incoming SMS short messages and evaluates their contents for control commands which are transmitted to the machine or equipment (11-15) to be controlled, both the transmitter (1) and the receiver (8, 9) being designed as a telecommunications terminal set up to transmit or receive SMS short messages.

7. Device according to claim 6, **characterised in that** the telecommunications terminals are analogue or digital terminals (8, 9) for the land-line connection.

8. Device according to one of claims 6 or 7, **characterised in that** an SMS gateway (5) is provided for transmission of the SMS short messages between at least one mobile telephone network (3) and a land-line network (6).

## Revendications

1. Procédé pour commander par l'intermédiaire d'au moins un réseau de télécommunication des machines ou des appareils prévus sur des raccordements au réseau fixe, selon lequel on utilise pour commander les machines ou les appareils (11-15) des messages courts SMS qui sont transmis entre au moins un réseau radiotéléphonique mobile (3) et un réseau fixe (6) à l'aide d'une passerelle SMS (5), les messages courts SMS étant dotés du côté d'un émetteur (1) d'ordres de commande qui sont évalués du côté d'un récepteur (8, 9) relié au réseau fixe (6) et qui sont retransmis aux machines ou aux appareils (11-15) sous la forme de signaux de commande,
**caractérisé en ce qu'**il est prévu, relié au terminal de télécommunication (9) de l'émetteur ou mis en application dans celui-ci, un module de commande (10) qui reçoit des messages courts SMS entrants et évalue leur contenu en ce qui concerne les ordres de commande, lesquels sont retransmis à la machine ou à l'appareil à commander (11-15), étant précisé que les ordres de commande contiennent un numéro d'identification de la machine ou de l'appareil à commander (11-15), que les messages courts SMS (2) sont identifiés comme des messages courts SMS contenant des ordres de commande et que les ordres de commande sont authentifiés par le poste correspondant à l'aide de l'adresse de l'émetteur (1) et/ou de l'adresse du récepteur (8, 9).

2. Procédé selon la revendication 1, **caractérisé en ce que** les messages courts SMS sont transmis entre au moins un réseau radiotéléphonique mobile (3) et un réseau fixe (6) à l'aide d'une passerelle SMS (5).

3. Procédé selon l'une au moins des revendications précédentes, **caractérisé en ce que** le module de commande (10) communique sans fil ou par fil avec la machine ou l'appareil à commander (11-15).

4. Procédé selon l'une au moins des revendications précédentes, **caractérisé en ce qu'**un accusé de réception concernant les ordres de commande reçus et/ou exécutés est transmis par le module de commande (10) à l'émetteur.

5. Procédé selon l'une au moins des revendications précédentes, **caractérisé en ce que** les ordres de commande peuvent être entrés au niveau de l'émetteur (1) par l'intermédiaire d'un menu spécial ou d'une invitation à entrer.

6. Dispositif pour commander des machines et des appareils par l'intermédiaire d'au moins un réseau de télécommunication suivant le procédé selon les revendications 1 à 5, qui comprend :
un émetteur (1) conçu pour émettre des messages courts SMS et un récepteur (8, 9) conçu pour recevoir des messages courts SMS, entre lesquels sont échangés des messages SMS (2) qui sont utilisés côté récepteur pour commander les machines ou les appareils (11-15), et un module de commande (10) qui est relié au terminal de télécommunication prévu côté récepteur (9), qui reçoit les messages SMS entrants et dont le contenu est évalué en ce qui concerne les ordres de commande, lesquels sont transmis à la machine ou à l'appareil à commander (11-15), l'émetteur (1) et le récepteur (8, 9) étant conçus tous les deux comme des terminaux de télécommunication conçus pour émettre et recevoir des messages courts SMS.

7. Dispositif selon la revendication 6, **caractérisé en ce que** les terminaux de télécommunication sont des terminaux analogiques ou numériques (8, 9) pour le raccordement au réseau fixe.

8. Dispositif selon la revendication 6 ou 7, **caractérisé en ce qu'**il est prévu une passerelle SMS (5) pour transmettre les messages courts SMS entre au moins un réseau radiotéléphonique mobile (3) et un réseau fixe (6).
